# EUROPÄISCHE PATENTSCHRIFT

(11) **EP 3 545 210 B1**
(45) Veröffentlichungstag und Bekanntmachung des Hinweises auf die Patenterteilung: **31.03.2021**
(21) Anmeldenummer: 17804548.0
(22) Anmeldetag: 27.11.2017
(51) Int. Cl.: F16F 7/14, B21K 25/00, B21F 35/00, F16F 1/12

(54) **DÄMPFUNGS- UND FEDERANORDNUNG UND VERFAHREN ZU DEREN HERSTELLUNG**
DAMPENING AND SPRING ARRANGEMENT AND METHOD FOR ITS PRODUCTION
AGENCEMENT D'AMORTISSEMENT ET DE RESSORT ET SON PROCÉDÉ DE FABRICATION

(30) Priorität: 28.11.2016 DE 102016223524
(43) Veröffentlichungstag der Anmeldung: 02.10.2019
(73) Patentinhaber: SC Sebert Tehnologie Srl, 520077 Sfântu Gheorghe (RO)
(72) Erfinder: KOPACZ, Laszlo, 520001 Sfântu Gheorghe (RO)
(74) Vertreter: Patentanwälte Ruff, Wilhelm, Beier, Dauster & Partner mbB
(86) Internationale Anmeldenummer: PCT/EP2017/080544
(87) Internationale Veröffentlichungsnummer: WO 2018/096151

(56) Entgegenhaltungen:
- EP-A1- 2 339 202
- FR-A1- 2 601 739
- JP-A- S5 135 867
- US-A1- 2006 255 517

## Beschreibung

Die Erfindung betrifft eine Dämpfungs- und Federanordnung mit zwei Endstücken und mit einer Draht- oder Seilanordnung umfassend mindestens ein Draht- oder Seilstück, wobei die Endstücke über die Draht- oder Seilanordnung miteinander verbunden sind, wobei die Endstücke jeweils an ihren voneinander abgewandten Seiten mit mindestens einer Nut versehen sind, und wobei das mindestens eine Draht- oder Seilstück in eine Nut des einen Endstücks und in eine Nut des anderen Endstücks eingesetzt ist. Die Erfindung betrifft weiter ein Verfahren zur Herstellung dieser Dämpfungs- und Federanordnung. Schließlich betrifft die Erfindung eine Verwendung eines Endstücks mit mindestens einer Nut in einer Dämpfungs- und Federanordnung.

Aus EP 2 339 202 A1 ist eine gattungsgemäße Dämpfungs- und Federanordnung bekannt, wobei Abschnitte des mindestens einen Draht- oder Seilstücks in den Nuten durch verformte oder verpresste Nutseitenbereiche fixiert ist. Eine derartige Dämpfungs- und Federanordnung zeichnet sich dadurch aus, dass zur Herstellung der Draht- oder Seilanordnung ein Draht oder ein Seil in einfacher Weise mittels einer einfachen Wickelmaschine so um die beiden Endstücke gewickelt werden kann, dass die Windungen jeweils durch die Nuten verlaufen. Dies ist beispielsweise mittels eines automatisierten Herstellungsprozesses möglich. Anschließend müssen dann lediglich noch die Nutseitenbereiche so verformt bzw. verpresst werden, dass die Windungen in den Nuten fixiert werden. Dies kann für die einzelnen Nuten nacheinander oder für alle Nuten eines Endstücks in einem einzigen Pressvorgang erfolgen, der ebenfalls in einfacher Weise automatisierbar ist. Zusätzliche Fixierteile sind dabei nicht erforderlich.

Aus JP 51-35867 ist eine Dämpfungs- und Federanordnung mit zwei einander gegenüberliegenden Endstücken bekannt, wobei die Endstücke jeweils an zwei einander gegenüberliegenden Schmalseiten Nuten aufweisen, in welche Abschnitte eines als geschlossene Schlaufe gestalteten Seilstücks eingelegt sind. Das Seilstück wird anhand der plastischen Verformung der Kanten der Stege in den Nuten fixiert.

### AUFGABE UND LÖSUNG

Es ist die Aufgabe der Erfindung, eine derartige Dämpfungs- und Federanordnung und ein Verfahren zu deren Herstellung weiter zu verbessern.

Diese Aufgabe wird gelöst, durch die Dämpfungs- und Federanordnung mit den Merkmalen des Anspruchs 1 und ein Verfahren zur Herstellung einer Dämpfungs- und Federanordnung mit den Merkmalen des Anspruchs 5. Weitere Vorteile ergeben sich aus den Unteransprüchen.

Gemäß einem ersten Aspekt wird eine Dämpfungs- und Federanordnung mit zwei Endstücken und mit einer die Endstücke miteinander verbindenden Draht- oder Seilanordnung umfassend mindestens ein Draht- oder Seilstück geschaffen, wobei die Endstücke jeweils an ihren voneinander abgewandten Seitenflächen mit mindestens einer Nut versehen sind, wobei das mindestens eine Draht- oder Seilstück in eine Nut des einen Endstücks und in eine Nut des anderen Endstücks eingesetzt ist, wobei eine Nuttiefe der Nuten jeweils kleiner ist als ein Durchmesser des eingelegten Draht- oder Seilstücks, wobei jeweils an mindestens einem Seitenbereich der Nuten mindestens ein Steg gebildet ist, und wobei die an mindestens einem Seitenbereich angeordneten Stege derart plastisch verformt sind, dass die Stege einen in die Nut eingelegten Abschnitt des mindestens einen Draht- oder Seilstücks zumindest teilweise für eine Fixierung des Draht- oder Seilstück in der Nut umgreifen.

Die Endstücke sind jeweils als langgestreckte Leistenelemente gestaltet, die jeweils an ihren voneinander abgewandten Seitenfläche mit einer Vielzahl quer zur Längsrichtung verlaufenden Nuten versehen sind, wobei das mindestens eine Draht- oder Seilstück abwechselnd jeweils durch eine Nut des einen Endstücks und dann durch eine Nut des anderen Endstücks verläuft.

Da die Nuttiefe kleiner ist als der Durchmesser des eingelegten Draht- oder Seilstücks ragt das eingelegte Draht- oder Seilstück im Unterschied zu der aus EP 2 339 202 A1 bekannten Dämpfungs- und Federanordnung aus der Nut heraus.

Die Stege ragen vor einer Verformung von einem Innenraum der Nuten derart ab, dass ein Einlegen des Draht-oder Seilstücks in die Nuten nicht verhindert oder zumindest nicht wesentlich gestört ist. Nach dem Einlegen werden die an mindestens einer Seite einer Nut angeordneten Stege plastisch verformt und dadurch der in der Nut aufgenommene Abschnitt des Draht-oder Seilstücks in der Nut fixiert.

Die plastische Verformung wird auch als Verpressen bezeichnet. Die Endstücke sind zu diesem Zweck aus einem plastisch verformbaren Material, insbesondere aus einem plastisch verformbaren Metall, wie beispielsweise aus Aluminium, aus einer Aluminiumlegierung oder aus Edelstahl. Das mindestens eine Draht- oder Seilstück ist vorzugsweise als Drahtseilstück oder Stahldrahtlitze ausgebildet. Die Stege können schmal dimensioniert werden, so dass für das Verpressen nur geringe Kräfte aufzubringen sind.

In einer Ausgestaltung ist nur an einer Seite der Nut ein Steg vorgesehen. In einer anderen Ausgestaltung ist beidseits der Nut jeweils mindestens ein Steg vorgesehen, wobei sich die freien Enden der Stege nach einer plastischen Verformung berühren, sodass das Draht- oder Seilstück vollständig umgriffen ist. In anderen Ausgestaltungen verbleibt zwischen den freien Enden der Stege nach einer plastischen Verformung ein Abstand, d. h. die Stege umgreifen das Draht- oder Seilstück nur teilweise und nicht vollständig.

Die Endstücke sind vorzugsweise zur Fixierung während des Herstellungsprozesses und/oder zur späteren Fixierung der beiden Endstücke zwischen zu dämpfenden und/oder zu federnden Massen mit Montage- und/oder Haltelöchern versehen.

In einer Ausgestaltung ist die Länge der Stege geringer als eine Länge der Nut, sodass ein Steg gebildet wird, der sich nur über einen Teil der Nut erstreckt. In anderen Ausgestaltungen sind beidseits der Nuten oder an einer Seite der Nut ein sich über die gesamte Länge der Nut erstreckender Steg vorgesehen, wobei die Stege Unterbrechungen aufweisen. In vorteilhaften Ausgestaltungen ist an beiden Seitenbereichen einer Nut jeweils ein durchgängiger Steg vorgesehen. Zudem sind Ausgestaltungen denkbar, bei welchen ab beiden Seitenbereichen jeweils mehrere kurze Stege vorgesehen sind, wobei die Stege der gegenüberliegenden Seitenbereiche versetzt angeordnet sind und bei einer plastischen Verformung nach Art einer Verzahnung ineinandergreifen.

In welchem Winkelbereich der Abschnitt des Draht- oder Seilstücks eingeschlossen wird, hängt in erster Linie von der Tiefe der Nuten ab. Durch geeignete Wahl der Nuttiefe und der Höhe der Stege ist dabei ein Winkelbereich, über den die Stege den Abschnitt umgreifen, festlegbar.

Das Draht- oder Seilstück weist in bekannten Ausgestaltungen einen zumindest im Wesentlichen kreisförmigen Querschnitt auf. Die Nuten weisen entsprechend in vorteilhaften Ausgestaltungen einen im Querschnitt halbkreisförmigen Bereich auf, wobei die Stege von dem halbkreisförmigen Bereich abragen.

Eine Materialstärke der Stege ist derart gewählt, dass eine sichere Verformung und Fixierung ohne Zerstörung möglich ist und gleichzeitig die für eine Verformung aufzubringenden Kräfte gering gehalten werden.

Für eine Herstellung einer beschriebenen Dämpfungs- und Federanordnung wird in einer vorteilhaften Ausgestaltung zunächst das mindestens eine Draht- oder Seilstück zunächst in eine Nut des einen Endstücks und in eine Nut des anderen Endstücks eingelegt und anschließend werden Abschnitte des Draht- oder Seilstücks in den Nuten fixiert durch plastische Verformung der an mindestens einem Seitenbereich der Nuten angeordneten Stege derart, dass die Stege den in die Nut eingelegten Abschnitt des mindestens einen Draht- oder Seilstücks zumindest teilweise umgreifen.

Die Endstücke sind jeweils als langgestreckte Leistenelemente gestaltet, die jeweils an ihren voneinander abgewandten Seitenflächen mit einer Vielzahl quer zur Längsrichtung verlaufenden Nuten versehen sind, wobei zum Einlegen des Draht- oder Seilstücks zunächst ein Wickeln des mindestens einen Draht- oder Seilstücks um die Endstücke derart erfolgt, dass das Draht- oder Seilstück abwechselnd jeweils durch eine Nut des einen Endstücks und dann durch eine Nut des anderen Endstücks verläuft.

Ein Wickeln erfolgt beispielsweise mittels einer Wickelvorrichtung, wobei zu diesem Zweck an den Endstücken in einer Ausgestaltung ein Montagedorn fixiert wird. Eine plastische Verformung der Stege wird beispielsweise mittels einer Verpressvorrichtung ausgeführt, wobei je nach Gestaltung alle Stege gleichzeitig oder nacheinander verformt werden.

Um bei der Herstellung der Dämpfungs- und Federanordnung ein Draht oder ein Seil verwenden zu können, das ohne spezifische Längenabmessung beispielsweise auf einer Vorratsrolle aufgewickelt ist, wird ein Ende des Drahts oder des Seils vor dem Wickeln festgehalten und der Draht oder das Seil wird nach dem Fixieren in den Nuten unter Bildung des Draht- oder Seilstücks abgeschnitten. Anschließend kann ein weiteres Draht- oder Seilstück an denselben Endstücken angebracht werden oder an neuen Endstücken.

Die Stege werden in vorteilhaften Ausgestaltungen durch eine angrenzend an die Nut in das Endstück eingebrachte nutenförmige Aussparung gebildet.

### KURZBESCHREIBUNG DER ZEICHNUNGEN

Weitere Vorteile und Aspekte der Erfindung ergeben sich aus den Ansprüchen und aus der nachfolgenden Beschreibung eines Ausführungsbeispiels der Erfindung, das nachfolgend anhand der Figuren erläutert ist. Dabei zeigen:
Fig. 1: eine perspektivische Darstellung einer Dämpfungs-und Federanordnung,
Fig. 2: eine Seitenansicht der in Fig. 1 dargestellten Dämpfungs- und Federanordnung,
Fig. 3: ein Detail III gemäß Fig. 2,
Fig. 4: eine perspektivische Darstellung eines der beiden Endstücke vor dem Anbringen der Draht- oder Seilanordnung vor einer Verformung,
Fig. 5: eine Seitenansicht des in Fig. 4 dargestellten Endstücks,
Fig. 6: eine perspektivische Darstellung eines der beiden Endstücke ohne Draht- oder Seilanordnung nach einer Verformung und
Fig. 7: eine Seitenansicht des in Fig. 6 dargestellten Endstücks.

### DETAILLIERTE BESCHREIBUNG DER AUSFÜHRUNGSBEISPIELE

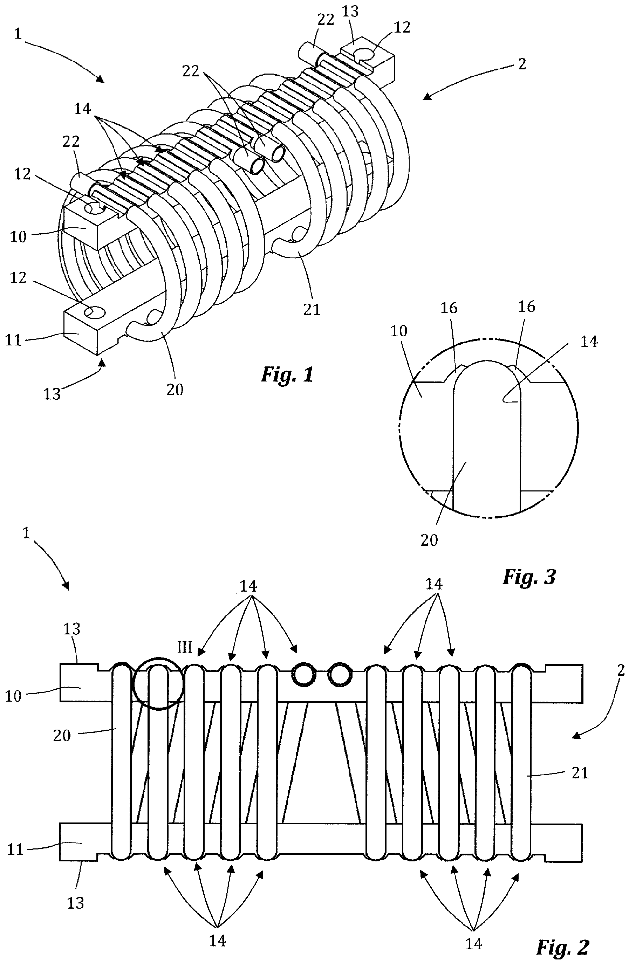

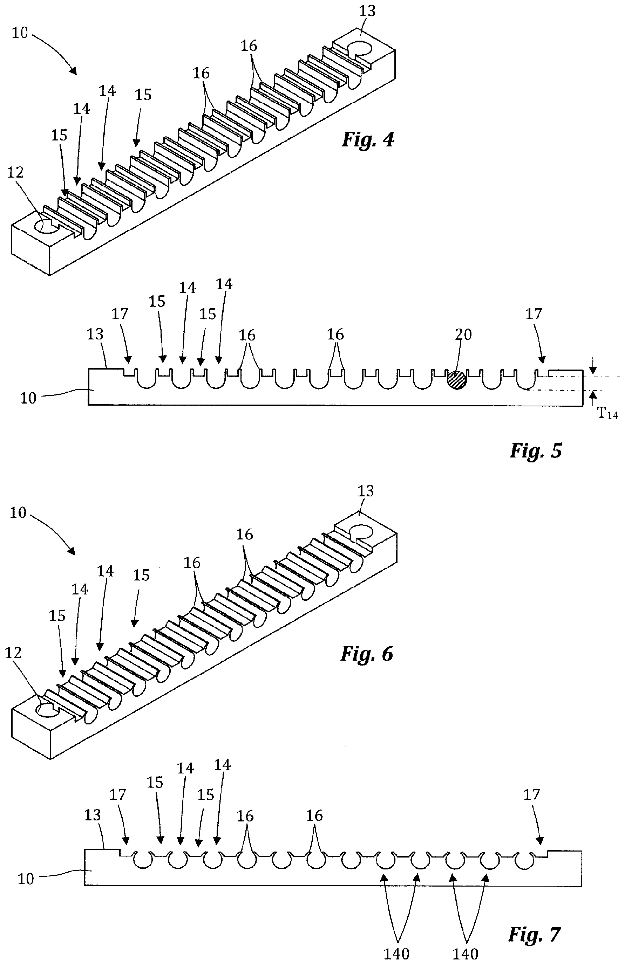

Die in den Figuren 1 bis 3 dargestellte Dämpfungs- und Federanordnung 1 besteht aus zwei zumindest im Wesentlichen parallel und voneinander beabstandet angeordneten Endstücken 10, 11 sowie einer Draht- oder Seilanordnung 2, mittels welcher die Endstücke miteinander verbunden sind. Ein in den Figuren 1 bis 3 in der Zeichenebene oben angeordnetes Endstück 10 ist in den Figuren 4 bis 7 separat dargestellt, dabei zeigen die Figuren 4 und 5 das Endstück 10 vor einer erfindungsgemäßen plastischen Verformung und die Figuren 6 und 7 das Endstück 10 nach der plastischen Verformung.

Die dargestellten Endstücke 10, 11 sind als langgestreckte Flachleistenelemente mit einem im Wesentlichen rechteckigen Querschnitt gestaltet. Die Endstücke 10, 11 sind aus einem verformbaren Material, vorzugsweise einem verformbaren Metall, beispielsweise aus Aluminium, einer Aluminiumlegierung oder aus Edelstahl, hergestellt. Zur Fixierung dieser Endstücke 10, 11 während des Herstellungsprozesses oder später zur Fixierung zwischen zu dämpfenden oder abzufedernden Gegenständen sind in dem dargestellten Ausführungsbeispiel an jedem Endstück zwei Durchgangsbohrungen 12 vorgesehen, die im Ausführungsbeispiel an den Endbereichen der Endstücke 10, 11 angeordnet sind. Je nach Erfordernis können mehr oder weniger zwei Durchgangsbohrungen 12 vorgesehen sein und/oder diese eine andere Position einnehmen. Weiter ist es denkbar, anstelle von Durchgangsbohrungen Gewindebohrungen oder andere Verbindungselemente wie Stifte oder dergleichen vorzusehen.

Die dargestellte Draht- oder Seilanordnung 2 umfasst zwei wendelförmig gewundene Draht-oder Seilstücke 20, 21. An dem Enden der Draht- oder Seilstücke 20, 21 ist jeweils eine Abdeckung 22 vorgesehen, um Verletzungen zu vermeiden und im Falle der Ausbildung des Draht- oder Seilstücks 20, 21 als Drahtseilstück oder Stahldrahtlitze die Enden zu sichern. In anderen Ausgestaltungen sind kurze Draht- oder Seilstücke vorgesehen, die jeweils mit einem Ende an einem Endstück befestigt sind.

Die dargestellten Endstücke 10, 11 besitzen an einer Seitenfläche 13 jeweils eine Vielzahl von quer zur Längsrichtung verlaufenden parallelen Nuten 14. Diese Nuten sind in dem dargestellten Ausführungsbeispiel äquidistant und in einem Winkel von 90° zur Längsrichtung angeordnet, jedoch sind voneinander abweichende Abstände einzelner Nuten 14 und/oder eine Anordnung der Nuten 14 in einem anderen Winkel quer zur Längsrichtung möglich. Die Anzahl der Nuten 14, deren Abstände und Ausrichtung kann durch den Fachmann in Abhängigkeit einer zu erzielenden Dämpfungs- und/oder Federwirkung geeignet gewählt werden.

In dem dargestellten Ausführungsbeispiel sind die zwei Endstücke 10, 11 unterschiedlich gestaltet, wobei ein in der Zeichenebene oben dargestelltes Endstück 10 zwölf Nuten 14 aufweist. Das in der Zeichenebene unten dargestellte Endstück 11 weist dagegen nur zehn Nuten auf, wobei die Nuten 14 in zwei Gruppen mit jeweils fünf Nuten 14 gruppiert sind und die zwei Gruppen von einer Mitte des Endstücks beabstandet sind. In anderen Ausgestaltungen sind die beiden Endstücke 10, 11 baugleich gestaltet.

Wie am besten in den Figuren 4 und 5 erkennbar ist, sind in dem dargestellten Ausführungsbeispiel an beiden Seitenerbeichen der Nuten 14 jeweils ein Steg 16 vorgesehen. Die Stege 16 werden in dem dargestellten Ausführungsbeispiel durch parallel zu den Nuten 14 verlaufende, nutenförmige Aussparung 15 gebildet, die zwischen aufeinanderfolgenden Nuten 14 an den Seitenflächen 13 vorgesehen sind. An Außenseiten der an den Enden angeordneten Nuten 14 sind ebenfalls nutenförmige Aussparung 17 vorsehen, sodass auch an beiden Seitenbereichen der an den Enden angeordneten Nuten 14 jeweils ein Steg 16 gebildet ist. In dem dargestellten Ausführungsbeispiel ist zwischen zwei Nuten 14 jeweils nur eine nutenförmige Aussparung 15 vorgesehen, deren Breite derart gewählt ist, dass zwei Stege 16 an den Seitenbereichen zu den Nuten 14 verbleiben. In anderen Ausgestaltungen sind zwei Aussparungen zwischen den aufeinanderfolgenden Nuten 14 vorgesehen, deren Breite im Vergleich zu dem dargestellten Ausführungsbeispiel geringer ist, wobei durch jede der nutenförmigen Aussparungen jeweils ein Steg 16 an einem Seitenbereichen einer angrenzenden Nuten 14 gebildet wird.

Wie in den Figuren 1 bis 3 erkennbar, sind Abschnitte der wendelförmig gewundenen Draht-oder Seilstücke 20, 21 in die Nuten 14 eingesetzt und in den Nuten 14 mittels der zu diesem Zweck plastisch verformten Stege 16 fixiert.

Wie in Fig. 5 erkennbar, weisen die Nuten 14 in dem dargestellten Ausführungsbeispiel einen im Querschnitt halbkreisförmigen Bereich auf. Eine Nuttiefe T₁₄ der Nuten 14 ist kleiner ist als ein Durchmesser des schematisch in Fig. 5 schraffiert dargestellten, eingelegten Draht- oder Seilstücks 20, sodass das eingelegte Draht- oder Seilstücks 20 aus der Nut 14 herausragt.

Die Figuren 6 und 7 zeigen das Endstück 10 ohne Draht- oder Seilstücke 20, 21 nach einer plastischen Verformung der Stege 16. Nach dem Verformen der Stege 16 und Umgreifen des aus der Nut 14 herausragenden Teils des Draht- oder Seilstücks verbleibt in dem dargestellte Ausführungsbeispiel zwischen den Enden der plastisch verformten Stege 16 ein Spalt.

Zur Herstellung der in den Figuren 1 bis 3 dargestellten Dämpfungs- und Federanordnung 1 werden zunächst die beiden Endstücke 10, 11 so zu beiden Seiten eines nicht dargestellten Montagedorns fixiert, dass die die Nuten 14 aufweisenden Seitenflächen 13 der Endstücke 10, 11 in entgegengesetzte Richtungen weisen. Dann werden zwei Draht- oder Seilstücke 20, 21 wendelförmig mit entgegengesetztem Wicklungssinn zur Bildung der Draht- oder Seilanordnung 2 an den beiden Endstücken 10, 11 angebracht. Dies erfolgt dadurch, dass jeweils ein Draht-oder Seil so um die beiden Endstücke 10, 11 unter Zugbelastung herumgewickelt wird, dass die Windungen jeweils abwechselnd durch eine Nut 14 im einen Endstück 10 und dann durch eine Nut 14 im anderen Endstück 11 verlaufen. Ein Anfang des Drahts oder Seils wird dabei fixiert, um eine straffe Wicklung zu ermöglichen. Nach dem Einlegen des Drahts oder Seils in die letzte Nut 14 werden die an den Seitenbereichen jeder Nut 14 angeordneten Stege 16 so plastisch verformt, dass der in der Nut 14 angeordnete Abschnitt des Drahts oder Seils in der Nut 14 fixiert wird. Dies ist im vergrößerten Ausschnitt gemäß Figur 3 dargestellt. Dabei werden jeweils beide an den Seitenbereichen einer Nut 14 vorgesehene Stege 16 gegeneinander unter Einschluss des durchlaufenden Abschnitts des Draht- oder Seilstücks 20, 21 plastisch verformt. Nach dem Fixieren der Abschnitte des Drahts Seils in der beschriebenen Weise an den beiden Endstücken 10, 11 werden die überstehenden Enden des Drahts oder Seils zu Bildung des Draht- oder Seilstücks 20, 21 abgeschnitten und die Enden werden mit den Abdeckungen 22 versehen.

Die beiden gegensinnig gewickelten Draht- oder Seilstücke 20, 21 können gleichzeitig oder nacheinander gewickelt oder fixiert werden. Auch die plastische Verformung und Verpressung der Stege 16 an den Seitenbereichen der Nuten 14 kann nacheinander oder gemeinsam durch ein entsprechendes Werkzeug erfolgen. Nach der Fertigstellung kann der Montagedorn (nicht dargestellt) herausgezogen oder auf andere Weise entfernt werden.

In dem dargestellten Ausführungsbeispiel erstrecken sich die Stege 16 über die gesamte Länge der Nut 14, sodass eine besonders gute und sichere Fixierung erreicht wird. In anderen Ausgestaltungen sind jedoch kürzere Stege oder unterbrochene Stege vorgesehen, sodass eine punktuelle Fixierung erzielt wird.

In dem dargestellten Ausführungsbeispiel sind zwei Draht- oder Seilstücke 20, 21 vorgesehen. In einer anderen Ausgestaltung ist nur ein einziges Draht- oder Seilstück vorgesehen. In wieder einer anderen Ausgestaltung wird der Wicklungsvorgang derart durchgeführt, dass eine einzige Wicklung zwei gegensinnige Bereiche aufweist. Dies kann beispielsweise dadurch erfolgen, dass die beiden inneren Wicklungsenden miteinander verbunden sind. In noch einer anderen Ausgestaltung sind mehr als zwei Draht- oder Seilstücke 20, 21 vorgesehen. Vorzugsweise ist für eine symmetrische Gestaltung der Dämpfungs- und Federanordnung 1 eine gerade Anzahl an Draht- oder Seilstücken 20, 21 vorgesehen.

## Patentansprüche

1. Dämpfungs- und Federanordnung mit zwei Endstücken (10, 11) und mit einer die Endstücke (10, 11) miteinander verbindenden Draht- oder Seilanordnung (2) umfassend mindestens ein Draht- oder Seilstück (20, 21), wobei die Endstücke (10, 11) jeweils an ihren voneinander abgewandten Seitenflächen (13) mit mindestens einer Nut (14) versehen sind, wobei das mindestens eine Draht- oder Seilstück (20, 21) jeweils in eine Nut (14) des einen Endstücks (10) und in eine Nut (14) des anderen Endstücks (11) eingelegt ist, wobei die Endstücke (10, 11) jeweils als langgestreckte Leistenelemente gestaltet sind, die jeweils an ihren voneinander abgewandten Seitenfläche (13) mit einer Vielzahl quer zur Längsrichtung verlaufenden Nuten (14) versehen sind, wobei das mindestens eine Draht- oder Seilstück (20, 21) abwechselnd jeweils durch eine Nut (14) des einen Endstücks (10) und dann durch eine Nut (14) des anderen Endstücks (11) verläuft, **dadurch gekennzeichnet, dass** eine Nuttiefe der Nuten (14) jeweils kleiner ist als ein Durchmesser des eingelegten Draht-oder Seilstücks (20, 21), und **dass** jeweils an mindestens einem Seitenbereich der Nuten (14) mindestens ein Steg (16) gebildet ist, wobei die an mindestens einem Seitenbereich der Nuten (14) angeordneten Stege (16) derart plastisch verformt sind, dass die Stege (16) einen in die Nut (14) eingelegten Abschnitt des mindestens einen Draht- oder Seilstücks (20, 21) zumindest teilweise für eine Fixierung des Draht- oder Seilstück (20, 21) in der Nut (14) umgreifen.

2. Dämpfungs- und Federanordnung nach Anspruch 1, **dadurch gekennzeichnet, dass** an beiden Seitenbereichen einer Nut (14) jeweils ein Steg (16) vorgesehen ist.

3. Dämpfungs- und Federanordnung nach Anspruch 1 oder 2, **dadurch gekennzeichnet, dass** der an mindestens einem der beiden Seitenbereichen einer Nut (14) vorgesehene Steg (16) durchgängig über die Länge der Nut (14) verläuft.

4. Dämpfungs- und Federanordnung nach einem der vorhergehenden Ansprüche, **dadurch gekennzeichnet, dass** die Nuten (14) einen im Querschnitt halbkreisförmigen Bereich aufweisen, wobei die Stege (16) von dem halbkreisförmigen Bereich abragen.

5. Verfahren zur Herstellung einer Dämpfungs- und Federanordnung (1) nach einem der Ansprüche 1 bis 4 mit zwei Endstücken (10, 11) und mit einer die Endstücke (10, 11) miteinander verbindenden Draht- oder Seilanordnung (2) umfassend mindestens ein Draht- oder Seilstück (20, 21), wobei die Endstücke (10, 11) jeweils an ihren voneinander abgewandten Seitenfläche (13) mit mindestens einer Nut (14) versehen sind, wobei eine Nuttiefe der Nuten (14) jeweils kleiner ist als ein Durchmesser des eingelegten Draht- oder Seilstücks (20, 21), und wobei jeweils an mindestens einem Seitenbereich der Nuten (14) mindestens ein Steg (16) gebildet ist, umfassend die Schritte
- Einlegen das mindestens eine Draht- oder Seilstück (20, 21) in eine Nut (14) des einen Endstücks (10) und in eine Nut (14) des anderen Endstücks (11) und
- Fixieren von Abschnitten des Draht- oder Seilstücks (20, 21) in den Nuten (14) durch plastische Verformung der an mindestens einem Seitenbereich der Nuten (14) angeordneten Stege (16) derart, dass die Stege (16) den in die Nut (14) eingelegten Abschnitt des mindestens einen Draht- oder Seilstücks (20, 21) zumindest teilweise umgreifen,
wobei die Endstücke (10, 11) jeweils als langgestreckte Leistenelemente gestaltet sind, die jeweils an ihren voneinander abgewandten Seitenflächen mit einer Vielzahl quer zur Längsrichtung verlaufenden Nuten versehen sind, wobei zum Einlegen des mindestens einen Draht- oder Seilstücks das mindestens eine Draht- oder Seilstücks (20, 21) um die Endstücke (10, 11) derart gewickelt wird, dass das Draht- oder Seilstück (20, 21) abwechselnd jeweils durch eine Nut (14) des einen Endstücks (10) und dann durch eine Nut (14) des anderen Endstücks (11) verläuft.

6. Verfahren nach Anspruch 5, **dadurch gekennzeichnet, dass** die Stege (16) durch eine angrenzend an die Nut (14) eingebrachte nutenförmige Aussparung (15) gebildet werden.

## Claims

1. Damping and spring arrangement having two end pieces (10, 11) and having a wire or cable arrangement (2) connecting the end pieces (10, 11) to each other and comprising at least one wire or cable piece (20, 21), wherein the end pieces (10, 11) on their lateral surfaces (13) which face away from each other each are provided with at least one groove (14), wherein the at least one wire or cable piece (20, 21) in each case is inserted into a groove (14) of the one end piece (10) and into a groove (14) of the other end piece (11), wherein the end pieces (10, 11) in each case are designed as elongate strip elements, each provided on their lateral surfaces (13) which face away from each other with a plurality of grooves (14) extending transversely to the longitudinal direction, wherein the at least one wire or cable piece (20, 21) extends, alternatingly, through a groove (14) of the one end piece (10) and then through a groove (14) of the other end piece (11),
**characterized in that** a groove depth of the grooves (14) is in each case smaller than a diameter of the inserted wire or cable piece (20, 21), and **in that** at least one bridge (16) is formed on at least one lateral region of each groove (14), wherein the bridges (16) arranged on at least one lateral region of the grooves (14) are plastically deformed such that the bridges (16) at least in part surround a section of the at least one wire or cable piece (20, 21), which is inserted into the groove (14), in order to fix the wire or cable piece (20, 21) in the groove (14).

2. Damping and spring arrangement according to claim 1, **characterized in that** on both lateral regions of a groove (14) in each case one bridge (16) is provided.

3. Damping and spring arrangement according to claim 1 or 2, **characterized in that** the bridge (16) provided on at least one of the two lateral regions of a groove (14) extends continuously over the length of the groove (14).

4. Damping and spring arrangement according to any of the preceding claims, **characterized in that** the grooves (14) in cross-section have a semi-circular region, wherein the bridges (16) project from the semi-circular region.

5. Method for producing a damping and spring arrangement (1) according to any of claims 1 to 4 having two end pieces (10, 11) and having a wire or cable arrangement (2) connecting the end pieces (10, 11) to each other and comprising at least one wire or cable piece (20, 21), wherein the end pieces (10, 11) on their lateral surfaces (13) which face away from each other each are provided with at least one groove (14), wherein a groove depth of the grooves (14) is in each case smaller than a diameter of the inserted wire or cable piece (20, 21), and wherein at least one bridge (16) is formed on at least one lateral region of each groove (14), comprising the steps
- inserting the at least one wire or cable piece (20, 21) into a groove (14) of the one end piece (10) and into a groove (14) of the other end piece (11), and
- fixing sections of the wire or cable piece (20, 21) in the grooves (14) by plastic deformation of the bridges (16) arranged on at least one lateral region of the grooves (14) such that the bridges (16) at least in part surround the section of the at least one wire or cable piece (20, 21), which is inserted into the groove (14),
wherein the end pieces (10, 11) in each case are designed as elongate strip elements, each provided on their lateral surfaces which face away from each other with a plurality of grooves extending transversely to the longitudinal direction, wherein, for inserting the at least one wire or cable piece, the at least one wire or cable piece (20, 21) is wound around the end pieces (10, 11) such that the wire or cable piece (20, 21) extends, alternatingly, through a groove (14) of the one end piece (10) and then through a groove (14) of the other end piece (11).

6. Method according to claim 5, **characterized in that** the bridges (16) are formed by a groove-shaped recess (15) provided adjacent to the groove (14).

## Revendications

1. Agencement d'amortissement et de ressort comprenant deux pièces d'extrémité (10, 11) et un agencement de fil ou de câble (2) reliant l'une à l'autre les pièces d'extrémité (10, 11), comprenant au moins une pièce de fil ou de câble (20, 21), les pièces d'extrémité (10, 11) étant pourvues, à chaque fois au niveau de leurs surfaces latérales (13) opposées l'une à l'autre, d'au moins une rainure (14), l'au moins une pièce de fil ou de câble (20, 21) étant placée à chaque fois dans une rainure (14) de l'une des pièces d'extrémité (10) et dans une rainure (14) de l'autre pièce d'extrémité (11), les pièces d'extrémité (10, 11) étant configurées à chaque fois sous forme d'éléments en forme de barrette allongés, qui sont pourvus à chaque fois, au niveau de leurs surfaces latérales (13) opposées l'une à l'autre, d'une pluralité de rainures (14) s'étendant transversalement à la direction longitudinale, l'au moins une pièce de fil ou de câble (20, 21) s'étendant en alternance à chaque fois à travers une rainure (14) de l'une des pièces d'extrémité (10) puis à travers une rainure (14) de l'autre pièce d'extrémité (11),
**caractérisé en ce qu'**une profondeur de rainure des rainures (14) est à chaque fois inférieure à un diamètre de la pièce de fil ou de câble introduite (20, 21), et **en ce qu'**au moins une nervure (16) est formée à chaque fois au niveau d'au moins une région latérale des rainures (14), les nervures (16) disposées au niveau d'au moins une région latérale des rainures (14) étant déformées plastiquement de telle sorte que les nervures (16) viennent en prise au moins en partie autour d'une portion de l'au moins une pièce de fil ou de câble (20, 21) introduite dans la rainure (14) en vue d'une fixation de la pièce de fil ou de câble (20, 21) dans la rainure (14).

2. Agencement d'amortissement et de ressort selon la revendication 1, **caractérisé en ce qu'**une nervure (16) est à chaque fois prévue au niveau des deux régions latérales d'une rainure (14).

3. Agencement d'amortissement et de ressort selon la revendication 1 ou 2, **caractérisé en ce que** la nervure (16) prévue au niveau d'au moins l'une des deux régions latérales d'une rainure (14) s'étend en continu sur la longueur de la rainure (14).

4. Agencement d'amortissement et de ressort selon l'une quelconque des revendications précédentes, **caractérisé en ce que** les rainures (14) présentent une région de forme semi-circulaire en section transversale, les nervures (16) faisant saillie depuis la région de forme semi-circulaire.

5. Procédé de fabrication d'un agencement d'amortissement et de ressort (1) selon l'une quelconque des revendications 1 à 4, comprenant deux pièces d'extrémité (10, 11) et un agencement de fil ou de câble (2) reliant l'une à l'autre les pièces d'extrémité (10, 11), comprenant au moins une pièce de fil ou de câble (20, 21), les pièces d'extrémité (10, 11) étant pourvues, à chaque fois au niveau de leurs surfaces latérales (13) opposées l'une à l'autre, d'au moins une rainure (14), une profondeur de rainure des rainures (14) étant à chaque fois inférieure à un diamètre de la pièce de fil ou de câble introduite (20, 21), et au moins une nervure (16) étant formée à chaque fois au niveau d'au moins une région latérale des rainures (14), ledit procédé comprenant les étapes suivantes :
- introduction de l'au moins une pièce de fil ou de câble (20, 21) dans une rainure (14) de l'une des pièces d'extrémité (10) et dans une rainure (14) de l'autre pièce d'extrémité (11) et
- fixation de portions de la pièce de fil ou de câble (20, 21) dans les rainures (14) par déformation plastique des nervures (16) disposées au niveau d'au moins une région latérale des rainures (14), de telle sorte que les nervures (16) viennent en prise au moins en partie autour de la portion de l'au moins une pièce de fil ou de câble (20, 21) introduite dans la rainure (14),
les pièces d'extrémité (10, 11) étant configurées à chaque fois sous forme d'éléments en forme de barrette allongés, qui sont pourvus à chaque fois, au niveau de leurs surfaces latérales opposées l'une à l'autre, d'une pluralité de rainures s'étendant transversalement à la direction longitudinale, l'au moins une pièce de fil ou de câble (20, 21) étant enroulée autour des pièces d'extrémité (10, 11) pour introduire l'au moins une pièce de fil ou de câble de telle sorte que la pièce de fil ou de câble (20, 21) s'étende en alternance à chaque fois à travers une rainure (14) de l'une des pièces d'extrémité (10) puis à travers une rainure (14) de l'autre pièce d'extrémité (11).

6. Procédé selon la revendication 5, **caractérisé en ce que** les nervures (16) sont formées par un évidement (15) en forme de rainure pratiqué à côté de la rainure (14).
